# EUROPEAN PATENT APPLICATION

(11) **EP 3 244 503 A1**
(43) Date of publication of application: **15.11.2017**
(21) Application number: 16425091.2
(22) Date of filing: 21.09.2016
(51) Int. Cl.: H02G 15/013, H02G 15/113

(54) **SHELL FOR GEL ISOLATION LOW VOLTAGE JOINTS WITH REMOVABLE BULKHEADS**

(30) Priority: 11.05.2016 IT UA20163350
(71) Applicant: Carpino, Antonio, 80123 Naples (IT)
(72) Inventor: Salvago, Marco, 80136 Naples (IT)
(74) Representative: Cirillo, Gennaro

(57) **Abstract**

The patent proposes a shell for junctions of low voltage cables, provided with movable bulkheads positioned in correspondence of the inlet and outlet seats of the cable.

## Description

The gel isolation technology, applied to the field of joints for low voltage cables, is now since more than two decades, a valid alternative to traditional methods of isolation in the casting resin for this type of applications.

Among the many advantages of the gel technology, among which one can mention: the non-toxicity and eco-compatibility of the materials used, as well as the absence of maturity even for prolonged warehouse stocks, one can assert that the main one that distinguishes the gel technology from that used in the casting resin, consists in the fact of not having to be mixed and filled with the insulating two-component resins for the shells of plastic material adapted to contain and protect the connection of electrical cables.

As in fact, in the gel isolation solution the same gel is already cast and cross-linked within the plastic shells, the user upon installation has the advantage of having the seat still ready for housing the electrical cables, thereby saving the time necessary for mixing and waiting for the curing of the insulating resin.

The production process of this type of gel insulation joints, provides for the filling of shells, preferably of polypropylene, according to various shapes and sizes depending on the joint to be made and the types of cables to accommodate, with a casting of a liquid mixture made of two silicone gel components, suitably dosed and mixed.

The liquid mixture will be hermetically contained within the shells for the mixing time necessary within the polymerization process, that is for the time necessary for the transition from liquid to gel.

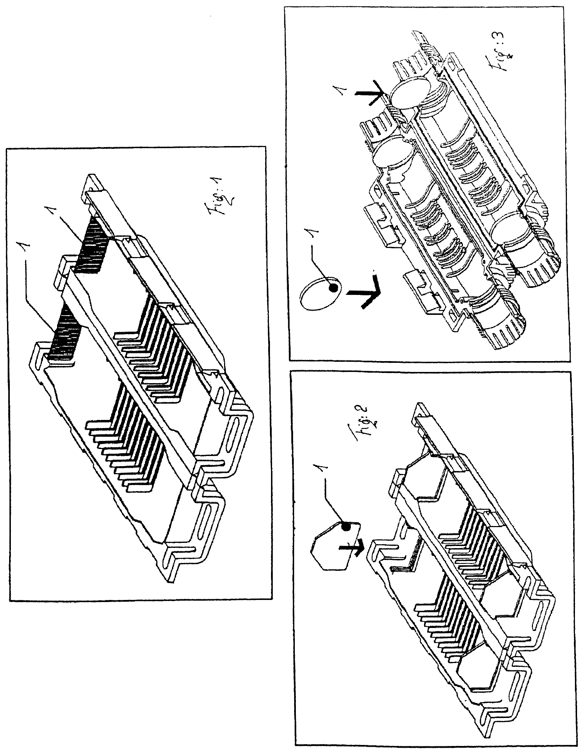

As said above therefore this implies that all peripheral edges of the outer containment shell of the joint, including the fixed bulkheads will be forced to break or be cut out in order to accommodate the incoming and outgoing cables from the joint, which must be perfectly intact and free of any type of hole or opening that could allow for a leakage of the still liquid gel, from outside the shell with the consequent defects of the final product (Fig. 1).

In the present state of the art, during their installation and laying, the suitably stripped, prepared and connected cables are positioned into such gel filled shells, so breaking or cutting the peripheral bulkheads made of the same material of the shell and pressed together with it.

After closing the shell, the insulating filler gel will lay between the cable and its walls, in correspondence of the cable outlet points and will ensure the isolation of the junction against the access of water and dust.

The containment bulkhead, pulled down from the cable positioned inside the joint, remains positioned in random alignment below the cable and may cause malfunctions such as: impairment of the right positioning of the gel between the cable and the shell, making the closure of the junction difficult due to increased thicknesses.

The proposed innovation consists in creating a new type of shells or removable containment bulkheads and therefore they are no longer integral with it.

Such removable bulkheads will be installed upstream of the production process, in correspondence with the inlet and outlet seats of the cables inside the shells to be filled with the liquid mixture.

The bulkheads, thus positioned, ensure the complete containment of the liquid mixture inside the shell, up to a complete cross-linking, with the passage of the mixture itself with the final state of gel. After the cross-linking occurred the removable containment bulkheads will be removed, either at factory during the packaging, or directly by the final user by the installation, leaving, in any case, the inlet and outlet seats of the cables free from any bulkhead which will be broken or cut.

The solution concept will be better understood by reference to the attached table, in which in Figs. 2) and 3) two shells are shown which are fitted with movable bulkheads (1) having different shapes.

Said bulkheads are made of a solid or partly flexible material, suitably shaped in order to be coupled in a perfect manner to the underlying accommodation seat, formed inside the shell, suitable to ensure, during the filling phase of the shell, the sealing against the loss of the insulating fluid mixture until the stage of passage into the gel state.

The shape and the dimensions of the bulkhead may vary according to its case, within which it will house.

The bulkhead may be equipped with suitable grips in order to allow an easy and smooth removal from its seat, when the insulating liquid mixture will be passed to the gel state and/or, in any case, prior to the installation of the joint and the positioning of the cables inside it.

To the solution idea formal and structural changes may be made, within the same inventive concept, as defined by the following claims.

## Claims

1. Shell for gel isolation low voltage joints, **characterized by** providing bulkheads (1) adapted to contain the gel liquid mixture up to its cross-linking and then to be removed.

2. Shell for gel isolation low voltage joints as in the preceding claim, **characterized in that** the removable bulkheads (1) are specially shaped to fit into appropriate seats made inside the shell.

3. Shell for gel isolation low voltage joints with gel isolation as in the preceding claims, **characterized in that** the removable bulkheads (1) are positioned in the vicinity of the inlet and outlet seats of the cables.

4. Shell for gel isolation low voltage joints as in the preceding claims, **characterized in that** the removable bulkheads (1) can be equipped with special grips in order to allow an easy and smooth removal from their seat.
